# EUROPEAN PATENT APPLICATION

(11) **EP 4 708 711 A1**
(43) Date of publication of application: **11.03.2026**
(21) Application number: 24822541.9
(22) Date of filing: 29.05.2024
(51) Int. Cl.: H04B 1/525

(54) **COMMUNICATION METHOD AND COMMUNICATION APPARATUS**

(30) Priority: 15.06.2023 CN 202310714927
(71) Applicant: Huawei Technologies Co., Ltd., Shenzhen, Guangdong 518129 (CN)
(72) Inventor: GONG, Zhengwei, Shenzhen, Guangdong 518129 (CN); LI, Lian, Shenzhen, Guangdong 518129 (CN); GENG, Haijian, Shenzhen, Guangdong 518129 (CN); GE, Yang, Shenzhen, Guangdong 518129 (CN)
(74) Representative: MERH-IP Matias Erny Reichl Hoffmann Patentanwälte PartG mbB
(86) International application number: PCT/CN2024/095964
(87) International publication number: WO 2024/255589

(57) **Abstract**

Embodiments of this application provide a communication method and a communication apparatus. The method includes: receiving resource indication information, where the resource indication information is used to determine information about at least one training resource; receiving at least one training signal on the at least one training resource; and determining a leakage propagation characteristic based on the at least one training signal, where the leakage propagation characteristic is used to determine a signal that is leaked from a sending link to a receiving link. According to this application, a device (for example, a radio frequency device) that receives the resource indication information may distinguish between the training resource and a non-training resource based on the resource indication information, so that the device that receives the resource indication information can determine the leakage propagation characteristic based on the training signal whose transmission is performed on the training resource, and training complexity can be reduced.

## Description

This application claims priority to Chinese Patent Application No. 202310714927.0, filed with the China National Intellectual Property Administration on June 15, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Thanks to use of frequency division duplexers, uplink transmission and downlink transmission between a base station and a terminal device may occur simultaneously. The uplink transmission is implemented by using an uplink receive frequency band, the downlink transmission is implemented by using a downlink transmit frequency band, and the uplink receive frequency band is different from the downlink transmit frequency band. However, when the uplink transmission and the downlink transmission occur simultaneously, a part of a downlink signal whose transmission is performed on a downlink may be leaked to an uplink, causing leakage interference to the uplink. For example, for the base station, signals received by the base station on the uplink include an uplink signal and a part of a downlink signal leaked to the uplink.

### SUMMARY

Embodiments of this application provide a communication method, so that a device that receives a training signal can estimate, based on the training signal, a leakage propagation characteristic corresponding to a signal that is leaked from a sending link to a receiving link. This helps eliminate or reduce leakage interference from the sending link to the receiving link based on the leakage propagation characteristic.

According to a first aspect, a communication method is provided. The method may be performed by a radio frequency device, or may be performed by a component (for example, a chip or a circuit) of a radio frequency device. This is not limited herein.

The method includes: receiving resource indication information, where the resource indication information is used to determine information about at least one training resource; receiving at least one training signal on the at least one training resource; and determining a leakage propagation characteristic based on the at least one training signal, where the leakage propagation characteristic is used to determine a signal that is leaked from a sending link to a receiving link.

Based on the foregoing technical solution, a device (for example, a control device) that sends a training signal may send the resource indication information. Therefore, a device (for example, the radio frequency device) that receives the resource indication information can identify, based on the resource indication information, a training resource used for transmission of the training signal. In this way, the device that receives the resource indication information can determine the leakage propagation characteristic based on the training signal whose transmission is performed on the training resource, and training complexity can be reduced. The device that receives the resource indication information determines the leakage propagation characteristic, which helps the device determine, based on the leakage propagation characteristic, the signal that is leaked from the sending link to the receiving link, and eliminate or weaken the signal that is leaked from the sending link to the receiving link, thereby improving a signal-to-noise ratio of the receiving link.

In a possible implementation, a training resource in the at least one training resource is not used for transmission of an uplink signal (or is used only for transmission of the training signal), or a strength of an uplink signal whose transmission is performed on the training resource is less than a strength threshold.

In a possible implementation, the method is applied to the radio frequency device, and receiving the resource indication information includes: The radio frequency device receives the resource indication information from the control device through an interface between a first module included in the radio frequency device and the control device, where the first module is configured to determine the leakage propagation characteristic based on the at least one training signal.

Based on the foregoing technical solution, when there is an interface between the control device and the first module of the radio frequency device, the control device may directly send the resource indication information to the first module through the interface, thereby reducing a transmission delay of the resource indication information.

For example, the interface between the first module and the control device is an interface between the first module and a layer 2 (layer 2, L2) control module of the control device, or an interface between the first module and a layer (layer 3, L3) control module of the control device.

With reference to the first aspect, in some implementations of the first aspect, the resource indication information includes one or more of the following: a time domain length of each of the at least one training resource, a time domain start position of each of the at least one training resource, a frequency domain start position of each of the at least one training resource, and a frequency domain length of each of the at least one training resource.

Based on the foregoing technical solution, when the resource indication information includes one or more of the foregoing items, the device that receives the resource indication information may determine a time domain position and/or a frequency domain position of the at least one training resource based on the resource indication information.

With reference to the first aspect, in some implementations of the first aspect, the resource indication information includes N bits, the N bits are in one-to-one correspondence with N time domain units, and an n^{th} bit in the N bits is used to indicate whether a time domain unit corresponding to the n^{th} bit belongs to the at least one training resource, where N is a positive integer, and n=1, 2, ..., N.

It may be understood that when the resource indication information includes the N bits, the device that receives the resource indication information may determine the time domain length of each of the at least one training resource and the time domain start position of each of the at least one training resource based on the N bits. In other words, the N bits are a representation form of the time domain length of each of the at least one training resource and/or a representation form of the time domain start position of each of the at least one training resource.

In a possible implementation, the at least one training resource includes N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources, where both N1 and N2 are positive integers.

Based on the foregoing technical solution, because the N1 first training resources are densely distributed in time domain, the leakage propagation characteristic converges more quickly to target performance when the device that receives the resource indication information estimates the leakage propagation characteristic based on a training signal whose transmission is performed on the N1 first training resources. The N2 second training resources are sparsely distributed in time domain, so that when impact on uplink service scheduling is small, the device that receives the resource indication information can update the leakage propagation characteristic based on a training signal whose transmission is performed on the N2 second training resources, to improve accuracy of the leakage propagation characteristic.

For example, the N1 first training resources are consecutive training resources, in other words, the time interval between two adjacent first training resources in the N1 first training resources is 0.

For example, a time domain resource of the N1 first training resources corresponds to a cell restart phase.

Based on the foregoing technical solution, specific service indicators are generally not counted in the cell restart phase, in other words, an uplink service may not be scheduled in the cell restart phase. Further, when the time domain resource of the N1 first training resources corresponds to the cell restart phase, the N1 first training resources are not used for transmission of an uplink signal. This helps the device that receives the resource indication information determine a more accurate leakage propagation characteristic.

For example, when the at least one training resource includes the N1 first training resources and the N2 second training resources, the resource indication information includes one or more of the following: a time domain start position of the at least one training resource, N1, N2, the time interval between two adjacent first training resources in the N1 first training resources, and the time interval between two adjacent second training resources in the N2 second training resources.

In a possible implementation, the at least one training resource includes a third training resource, and a frequency domain resource of the third training resource is a full frequency band of the sending link, or a frequency domain resource of the third training resource is sparsely distributed in a full frequency band of the sending link, or a frequency domain resource of the third training resource includes a part of a full frequency band of the sending link.

For example, if the frequency domain resource of the third training resource includes a part of the full frequency band of the sending link, the at least one training resource further includes a fourth training resource, a time domain resource of the fourth training resource is different from a time domain resource of the third training resource, and a frequency domain resource of the fourth training resource includes a remaining frequency band that is not occupied by the third training resource in the full frequency band.

Based on the foregoing technical solution, if the frequency domain resource of the third training resource is the full frequency band of the sending link, or the frequency domain resource of the third training resource is sparsely distributed in the full frequency band of the sending link, the device that receives the resource indication information may determine, based on a training signal whose transmission is performed on the third training resource, a leakage propagation characteristic corresponding to a complete downlink bandwidth. If the frequency domain resource of the third training resource includes a part of the full frequency band of the sending link, the device that receives the resource indication information may determine, by combining the training signals whose transmission is performed on the third training resource and the fourth training resource, the leakage propagation characteristic corresponding to the complete downlink bandwidth.

According to a second aspect, a communication method is provided. The method may be performed by a control device, or may be performed by a component (for example, a chip or a circuit) of a control device. This is not limited herein.

The method includes: sending resource indication information, where the resource indication information is used to determine information about at least one training resource; and sending at least one training signal on the at least one training resource, where the at least one training signal is used to determine a leakage propagation characteristic, and the leakage propagation characteristic is used to determine a signal that is leaked from a sending link to a receiving link.

Based on the foregoing technical solution, a device (for example, the control device) that sends a training signal may send the resource indication information. Then, a device (for example, a radio frequency device) that receives the resource indication information can distinguish, based on the resource indication information, between a training resource used for transmission of the training signal and a non-training resource not used for transmission of the training signal, so that the device that receives the resource indication information can determine the leakage propagation characteristic based on the training signal whose transmission is performed on the training resource, and training complexity can be reduced. The device that receives the resource indication information determines the leakage propagation characteristic, which helps the device determine, based on the leakage propagation characteristic, the signal that is leaked from the sending link to the receiving link, and eliminate or weaken the signal that is leaked from the sending link to the receiving link, thereby improving a signal-to-noise ratio of the receiving link.

In a possible implementation, the method is applied to the control device, and the sending the resource indication information includes: The control device sends the resource indication information to the radio frequency device through an interface between a first module included in the radio frequency device and the control device, where the first module is configured to determine the leakage propagation characteristic based on the at least one training signal.

Based on the foregoing technical solution, when there is an interface between the control device and the first module of the radio frequency device, the control device may directly send the resource indication information to the first module through the interface, thereby reducing a transmission delay of the resource indication information.

For example, the interface between the first module and the control device is an interface between the first module and an L2 control module of the control device, or an interface between the first module and an L3 control module of the control device.

With reference to the second aspect, in some implementations of the second aspect, the resource indication information includes one or more of the following: a time domain length of each of the at least one training resource, a time domain start position of each of the at least one training resource, a frequency domain start position of each of the at least one training resource, and a frequency domain length of each of the at least one training resource.

Based on the foregoing technical solution, when the resource indication information includes one or more of the foregoing items, the device that receives the resource indication information may determine a time domain position and/or a frequency domain position of the at least one training resource based on the resource indication information.

With reference to the second aspect, in some implementations of the second aspect, the resource indication information includes N bits, the N bits are in one-to-one correspondence with N time domain units, and an n^{th} bit in the N bits is used to indicate whether a time domain unit corresponding to the n^{th} bit belongs to the at least one training resource, where N is a positive integer, and n=1, 2, ..., N.

It may be understood that when the resource indication information includes the N bits, the device that receives the resource indication information may determine the time domain length of each of the at least one training resource and the time domain start position of each of the at least one training resource based on the N bits. In other words, the N bits are a representation form of the time domain length of each of the at least one training resource and/or a representation form of the time domain start position of each of the at least one training resource.

In a possible implementation, the at least one training resource includes N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources, where both N1 and N2 are positive integers.

Based on the foregoing technical solution, because the N1 first training resources are densely distributed in time domain, the leakage propagation characteristic converges more quickly to target performance when the device that receives the resource indication information estimates the leakage propagation characteristic based on a training signal whose transmission is performed on the N1 first training resources. The N2 second training resources are sparsely distributed in time domain, so that when impact on uplink service scheduling is small, the device that receives the resource indication information can update the leakage propagation characteristic based on a training signal whose transmission is performed on the N2 second training resources, to ensure accuracy of the leakage propagation characteristic.

For example, the N1 first training resources are consecutive training resources, in other words, the time interval between two adjacent first training resources in the N1 first training resources is 0.

For example, a time domain resource of the N1 first training resources corresponds to a cell restart phase.

Based on the foregoing technical solution, specific service indicators are generally not counted in the cell restart phase, in other words, an uplink service may not be scheduled in the cell restart phase. Further, when the time domain resource of the N1 first training resources corresponds to the cell restart phase, the N1 first training resources are not used for transmission of an uplink signal. This helps the device that receives the resource indication information determine a more accurate leakage propagation characteristic.

For example, when the at least one training resource includes the N1 first training resources and the N2 second training resources, the resource indication information includes one or more of the following: a time domain start position of the at least one training resource, N1, N2, the time interval between two adjacent first training resources in the N1 first training resources, and the time interval between two adjacent second training resources in the N2 second training resources.

In a possible implementation, the at least one training resource includes a third training resource, and a frequency domain resource of the third training resource is a full frequency band of the sending link, or a frequency domain resource of the third training resource is sparsely distributed in a full frequency band of the sending link, or a frequency domain resource of the third training resource includes a part of a full frequency band of the sending link.

For example, if the frequency domain resource of the third training resource includes a part of the full frequency band of the sending link, the at least one training resource further includes a fourth training resource, a time domain resource of the fourth training resource is different from a time domain resource of the third training resource, and a frequency domain resource of the fourth training resource includes a remaining frequency band that is not occupied by the third training resource in the full frequency band.

Based on the foregoing technical solution, if the frequency domain resource of the third training resource is the full frequency band of the sending link, or the frequency domain resource of the third training resource is sparsely distributed in the full frequency band of the sending link, the device that receives the resource indication information may determine, based on a training signal whose transmission is performed on the third training resource, a leakage propagation characteristic corresponding to a complete downlink bandwidth. If the frequency domain resource of the third training resource includes a part of the full frequency band of the sending link, the device that receives the resource indication information may determine, by combining the training signals whose transmission is performed on the third training resource and the fourth training resource, the leakage propagation characteristic corresponding to the complete downlink bandwidth.

With reference to the second aspect, in some implementations of the second aspect, the method further includes: determining the at least one training resource based on an actual uplink and downlink service scheduling requirement.

For example, a training resource in the at least one training resource is not used for transmission of an uplink signal, or a strength of an uplink signal whose transmission is performed on the training resource is less than a strength threshold.

Based on the foregoing technical solution, when the at least one training resource is determined based on the actual uplink and downlink service scheduling requirement, impact on actual uplink and downlink service scheduling and/or virtual loading of a downlink sending signal can be reduced while accuracy of the leakage propagation characteristic determined, based on a training signal whose transmission is performed on the at least one training resource, by the device that receives the resource indication information is ensured, to achieve an energy saving effect. For example, if downlink service signals whose transmission is performed on a time domain resource #1 and a time domain resource #2 may be combined into a downlink signal scheduled in a full frequency band, the time domain resource #1 and the time domain resource #2 may be determined as the training resources. Further, because the downlink service signals whose transmission is performed on the time domain resource #1 and the time domain resource #2 may be combined into a downlink signal scheduled in the full frequency band, the device that sends the training signal does not need to load an additional virtual downlink signal on a frequency band other than a frequency band used for transmission of the downlink service signals on the time domain resource #1 or the time domain resource #2, to construct the downlink signal scheduled in the full frequency band. In this way, the energy saving effect can be achieved.

According to a third aspect, a communication method is provided. The method includes: A control device sends resource indication information to a radio frequency device, where the resource indication information is used to determine information about at least one training resource; the control device sends at least one training signal to the radio frequency device on the at least one training resource; and the radio frequency device determines a leakage propagation characteristic based on the at least one training signal, where the leakage propagation characteristic is used to determine a signal that is leaked from a sending link of the radio frequency device to a receiving link of the radio frequency device.

Based on the foregoing technical solution, the control device may send the resource indication information. Then, the radio frequency device can distinguish, based on the resource indication information, between a training resource used for transmission of the training signal and a non-training resource not used for transmission of the training signal, so that the radio frequency device can determine the leakage propagation characteristic based on the training signal whose transmission is performed on the training resource, and training complexity can be reduced. The radio frequency device determines the leakage propagation characteristic, which helps the radio frequency device determine, based on the leakage propagation characteristic, the signal that is leaked from the sending link to the receiving link and eliminate or weaken the signal that is leaked from the sending link to the receiving link, thereby improving a signal-to-noise ratio of the receiving link.

According to a fourth aspect, a communication apparatus is provided. The communication apparatus includes a transceiver unit and a processing unit. The transceiver unit is configured to receive resource indication information, where the resource indication information is used to determine information about at least one training resource. The transceiver unit is further configured to receive at least one training signal on the at least one training resource. The processing unit is configured to determine a leakage propagation characteristic based on the at least one training signal, where the leakage propagation characteristic is used to determine a signal that is leaked from a sending link to a receiving link.

With reference to the fourth aspect, in some implementations of the fourth aspect, the transceiver unit is specifically configured to receive the resource indication information from a control device through an interface between a first module included in a radio frequency device and the control device, where the first module is configured to determine the leakage propagation characteristic based on the at least one training signal.

With reference to the fourth aspect, in some implementations of the fourth aspect, the interface between the first module and the control device is an interface between the first module and an L2 control module of the control device, or an interface between the first module and an L3 control module of the control device.

With reference to the fourth aspect, in some implementations of the fourth aspect, the resource indication information includes one or more of the following: a time domain length of each of the at least one training resource, a time domain start position of each of the at least one training resource, a frequency domain start position of each of the at least one training resource, and a frequency domain length of each of the at least one training resource.

With reference to the fourth aspect, in some implementations of the fourth aspect, the at least one training resource includes N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources, where both N1 and N2 are positive integers.

With reference to the fourth aspect, in some implementations of the fourth aspect, a time domain resource of the N1 first training resources corresponds to a cell restart phase.

With reference to the fourth aspect, in some implementations of the fourth aspect, the resource indication information includes one or more of the following: a time domain start position of the at least one training resource, N1, N2, the time interval between two adjacent first training resources in the N1 first training resources, and the time interval between two adjacent second training resources in the N2 second training resources.

With reference to the fourth aspect, in some implementations of the fourth aspect, the resource indication information includes N bits, the N bits are in one-to-one correspondence with N time domain units, and an n^{th} bit in the N bits is used to indicate whether a time domain unit corresponding to the n^{th} bit belongs to the at least one training resource, where N is a positive integer, and n=1, 2, ..., N.

With reference to the fourth aspect, in some implementations of the fourth aspect, the at least one training resource includes a third training resource, and a frequency domain resource of the third training resource is a full frequency band of the sending link, or a frequency domain resource of the third training resource is sparsely distributed in a full frequency band of the sending link, or a frequency domain resource of the third training resource includes a part of a full frequency band of the sending link.

With reference to the fourth aspect, in some implementations of the fourth aspect, the frequency domain resource of the third training resource includes a part of the full frequency band of the sending link, the at least one training resource further includes a fourth training resource, a time domain resource of the fourth training resource is different from a time domain resource of the third training resource, and a frequency domain resource of the fourth training resource includes a remaining frequency band that is not occupied by the third training resource in the full frequency band.

With reference to the fourth aspect, in some implementations of the fourth aspect, a training resource in the at least one training resource is not used for transmission of an uplink signal, or a strength of an uplink signal whose transmission is performed on the training resource is less than a strength threshold.

According to a fifth aspect, a communication apparatus is provided. The communication apparatus includes a transceiver unit. The transceiver unit is configured to send resource indication information, where the resource indication information is used to determine information about at least one training resource. The transceiver unit is further configured to send at least one training signal on the at least one training resource, where the at least one training signal is used to determine a leakage propagation characteristic, and the leakage propagation characteristic is used to determine a signal that is leaked from a sending link to a receiving link.

With reference to the fifth aspect, in some implementations of the fifth aspect, the transceiver unit is specifically configured to send the resource indication information to a radio frequency device through an interface between a first module included in the radio frequency device and a control device, where the first module is configured to determine the leakage propagation characteristic based on the at least one training signal.

With reference to the fifth aspect, in some implementations of the fifth aspect, the interface between the first module and the control device is an interface between the first module and an L2 control module of the control device, or an interface between the first module and an L3 control module of the control device.

With reference to the fifth aspect, in some implementations of the fifth aspect, the resource indication information includes one or more of the following: a time domain length of each of the at least one training resource, a time domain start position of each of the at least one training resource, a frequency domain start position of each of the at least one training resource, and a frequency domain length of each of the at least one training resource.

With reference to the fifth aspect, in some implementations of the fifth aspect, the at least one training resource includes N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources, where both N1 and N2 are positive integers.

With reference to the fifth aspect, in some implementations of the fifth aspect, a time domain resource of the N1 first training resources corresponds to a cell restart phase.

With reference to the fifth aspect, in some implementations of the fifth aspect, the resource indication information includes one or more of the following: a time domain start position of the at least one training resource, N1, N2, the time interval between two adjacent first training resources in the N1 first training resources, and the time interval between two adjacent second training resources in the N2 second training resources.

With reference to the fifth aspect, in some implementations of the fifth aspect, the resource indication information includes N bits, the N bits are in one-to-one correspondence with N time domain units, and an n^{th} bit in the N bits is used to indicate whether a time domain unit corresponding to the n^{th} bit belongs to the at least one training resource, where N is a positive integer, and n=1, 2, ..., N.

With reference to the fifth aspect, in some implementations of the fifth aspect, the at least one training resource includes a third training resource, and a frequency domain resource of the third training resource is a full frequency band of the sending link, or a frequency domain resource of the third training resource is sparsely distributed in a full frequency band of the sending link, or a frequency domain resource of the third training resource includes a part of a full frequency band of the sending link.

With reference to the fifth aspect, in some implementations of the fifth aspect, the frequency domain resource of the third training resource includes a part of the full frequency band of the sending link, the at least one training resource further includes a fourth training resource, a time domain resource of the fourth training resource is different from a time domain resource of the third training resource, and a frequency domain resource of the fourth training resource includes a remaining frequency band that is not occupied by the third training resource in the full frequency band.

With reference to the fifth aspect, in some implementations of the fifth aspect, the communication apparatus further includes a processing unit, and the processing unit is configured to determine the at least one training resource based on an actual uplink and downlink service scheduling requirement.

With reference to the fifth aspect, in some implementations of the fifth aspect, a training resource in the at least one training resource is not used for transmission of an uplink signal, or a strength of an uplink signal whose transmission is performed on the training resource is less than a strength threshold.

According to a sixth aspect, a communication apparatus is provided, including a control module and a radio frequency module. The control module is configured to send resource indication information to the radio frequency module, where the resource indication information is used to determine information about at least one training resource. The control module is further configured to send at least one training signal to the radio frequency module on the at least one training resource. The radio frequency module is configured to determine a leakage propagation characteristic based on the at least one training signal, where the leakage propagation characteristic is used to determine a signal that is leaked from a sending link of the communication apparatus to a receiving link of the communication apparatus.

According to a seventh aspect, this application provides a communication apparatus, including a processor. The processor is coupled to a memory, and may be configured to execute instructions in the memory, to implement the method according to the first aspect or any possible implementation of the first aspect. The communication apparatus further includes the memory. The communication apparatus further includes a communication interface, and the processor is coupled to the communication interface.

In an implementation, the communication apparatus is a radio frequency device. When the communication apparatus is the radio frequency device, the communication interface may be a transceiver or an input/output interface.

In another implementation, the communication apparatus is a chip or a chip system configured in the radio frequency device. When the communication apparatus is the chip or the chip system configured in the radio frequency device, the communication interface may be an input/output interface.

The transceiver may be a transceiver circuit. The input/output interface may be an input/output circuit.

According to an eighth aspect, this application provides a communication apparatus, including a processor. The processor is coupled to a memory, and may be configured to execute instructions in the memory, to implement the method according to the second aspect or any possible implementation of the second aspect. The communication apparatus further includes the memory. The communication apparatus further includes a communication interface, and the processor is coupled to the communication interface.

In an implementation, the communication apparatus is a control device. When the communication apparatus is the control device, the communication interface may be a transceiver or an input/output interface.

In another implementation, the communication apparatus is a chip or a chip system configured in the control device. When the communication apparatus is the chip or the chip system configured in the control device, the communication interface may be an input/output interface.

The transceiver may be a transceiver circuit. The input/output interface may be an input/output circuit.

According to a ninth aspect, this application provides a processor, including an input circuit, an output circuit, and a processing circuit. The processing circuit is configured to receive a signal through the input circuit and transmit a signal through the output circuit, so that the processor performs the method according to the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, this application provides a processing apparatus, including a communication interface and a processor. The communication interface is coupled to the processor. The communication interface is configured to input and/or output information. The information includes at least one of instructions or data. The processor is configured to execute a computer program, so that the processing apparatus performs the method according to the foregoing aspects.

According to an eleventh aspect, this application provides a processing apparatus, including: a processor and a memory. The processor is configured to read instructions stored in the memory, receive a signal via a receiver, and transmit a signal via a transmitter, so that the processing apparatus performs the method according to the foregoing aspects.

Optionally, there may be one or more processors. If there is a memory, there may be one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be separately disposed in different chips. A type of the memory and a manner in which the memory and the processor are disposed are not limited in embodiments of this application.

It should be understood that in a related information exchange process, for example, sending indication information may be a process of outputting the indication information from the processor, and receiving the indication information may be a process of inputting received indication information to the processor. Specifically, information output by the processor may be output to the transmitter, and input information received by the processor may be from the receiver. The transmitter and the receiver may be collectively referred to as a transceiver.

The apparatus in the tenth aspect and the eleventh aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently outside the processor.

According to a twelfth aspect, this application provides a computer program product. The computer program product includes a computer program (which may also be referred to as code or instructions). When the computer program is run, a computer is caused to perform the method according to the foregoing aspects.

According to a thirteenth aspect, this application provides a computer-readable storage medium. The computer-readable storage medium stores a computer program (which may also be referred to as code or instructions). When the computer program is run on a computer, the computer is caused to perform the method according to the foregoing aspects.

According to a fourteenth aspect, this application provides a system, including the foregoing control device and radio frequency device.

### BRIEF DESCRIPTION OF DRAWINGS

FIG. 1 is a diagram of a system applicable to a method according to an embodiment of this application;
FIG. 2 is a diagram of controlling leakage interference from a downlink to an uplink based on a transmit filter;
FIG. 3 is a schematic flowchart of a method according to an embodiment of this application;
FIG. 4 is a diagram of distribution of training resources in time domain;
FIG. 5 is a diagram of a relationship between a frequency domain resource of a training resource and a full frequency band;
FIG. 6 is a diagram of controlling, by a PALC module, leakage interference from a downlink to an uplink;
FIG. 7 is a block diagram of a communication apparatus according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a chip system according to an embodiment of this application.

### DESCRIPTION OF EMBODIMENTS

The following describes technical solutions of embodiments of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink, SL) communication system, a machine-to-machine (machine-to-machine, M2M) communication system, an internet of things (internet of things, IoT) communication system, a vehicle-to-everything (vehicle-to-everything, V2X) communication system, an uncrewed aerial vehicle (uncrewed aerial vehicle, UAV) communication system, or another communication system.

In descriptions of this application, unless otherwise specified, "/" indicates that associated objects are in an "or" relationship. For example, A/B may represent A or B. In this application, "and/or" merely describes only an association relationship between associated objects and indicates that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, a word like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

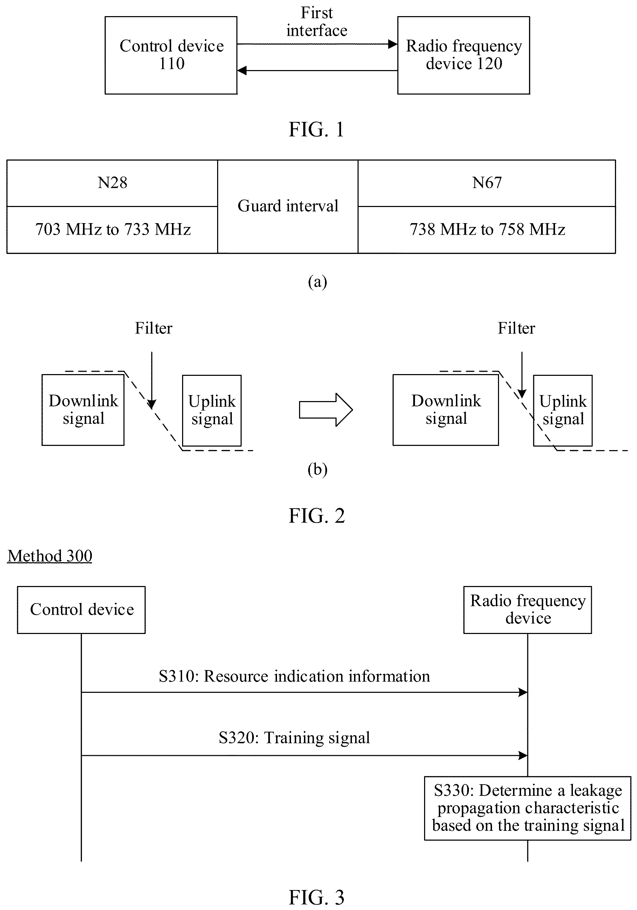

For ease of understanding of embodiments of this application, an application scenario of embodiments of this application is first described with reference to FIG. 1.

FIG. 1 is an architecture of a system applicable to a method according to an embodiment of this application. As shown in FIG. 1, the system includes a control device 110 and a radio frequency device 120. The control device 110 may serve as a main device of a base station, process digital baseband signals, and provide control and management for functions of devices of the base station. The radio frequency device 120 may serve as a radio frequency module of the base station, and configured to process intermediate frequency signals and/or radio frequency signals or receive and transmit radio signals.

The control device 110 is connected to the radio frequency device 120 through a first interface. The first interface may be any one of the following interfaces: a common public radio interface (common public radio interface, CPRI), an enhanced CPRI (enhanced CPRI, eCPRI) interface, or an interface defined in the future for connecting the control device and the radio frequency device. For example, the first interface may be referred to as a fronthaul (fronthaul) interface.

It should be noted that specific types of the control device 110 and the radio frequency device 120 are not limited in embodiments of this application. Any two devices connected through the first interface may be equivalent to the control device 110 and the radio frequency device 120 in this embodiment of this application. For example, the control device 110 may be any one of the following: a baseband unit (baseband unit, BBU or BU), a distributed unit (distributed unit, DU), or a central unit (central unit, CU). For example, the radio frequency device 120 may be any one of the following: a radio remote unit (radio remote unit, RRU), a radio unit (radio unit, RU), or an active antenna unit (active antenna unit, AAU).

In some deployments, the control device 110 may include a CU and a DU, and the DU is connected to the radio frequency device 120 through the first interface. Further, the CU may use an architecture in which a control plane (control plane, CP) and a user plane (user plane, UP) are separated. In other words, the CU may include a CU-CP entity and a CU-UP entity.

It should be further noted that, in FIG. 1, that the control device 110 is connected to one radio frequency device 120 is merely an example, and the control device 110 may be connected to more radio frequency devices.

In a wireless communication system, communication between a base station and a terminal device is generally implemented through a communication loop including a downlink (downlink, DL) and an uplink (uplink, UL).

In a possible implementation, thanks to use of frequency division duplexers, uplink transmission and downlink transmission between the base station and the terminal device may occur simultaneously. The uplink transmission is implemented by using an uplink receive frequency band, the downlink transmission is implemented by using a downlink transmit frequency band, and the uplink receive frequency band is different from the downlink transmit frequency band. However, when the uplink transmission and the downlink transmission occur simultaneously, a part of a downlink signal whose transmission is performed on a downlink may be leaked to an uplink, causing leakage interference to the uplink. For example, for the base station, signals received by the base station on the uplink include an uplink signal and a part of a downlink signal leaked to the uplink. That the downlink signal is leaked to the uplink may also be described as that a sending signal in the downlink transmit frequency band is leaked to the uplink receive frequency band of the uplink.

To avoid strong interference caused by the downlink to the uplink, leakage isolation between the uplink and the downlink may be improved by using a filter or sufficient physical isolation between the base station and the terminal device.

FIG. 2 is a diagram of using a transmit filter to suppress leakage interference from a downlink to an uplink by using an example in which an uplink receive frequency band is an N28 frequency band (703 megahertz (megahertz, MHz) to 733 MHz) and a downlink transmit frequency band is an N67 frequency band (738 MHz to 758 MHz). A main principle thereof is disposing, in the downlink transmit frequency band of the downlink, a filter corresponding to a bandwidth of the downlink transmit frequency band, and disposing a frequency domain guard band between the downlink transmit frequency band and the uplink receive frequency band. The filter may filter out an interference signal that is leaked from the downlink to the uplink and that is in the uplink.

As shown in (a) in FIG. 2, the uplink receive frequency band is the N28 frequency band (703 MHz to 733 MHz), and the downlink transmit frequency band is the N67 frequency band (738 MHz to 758 MHz). As shown in (b) in FIG. 2, if a frequency domain interval between a transmission frequency band of a downlink signal and a transmission frequency band of an uplink signal is large, amplitude of a signal outside a transmission bandwidth of the downlink signal may be reduced as much as possible by using the filter, to reduce interference to the uplink. As shown in the left diagram in (b) in FIG. 2, in the frequency band in which the uplink signal is located, the downlink signal is suppressed. If the frequency domain interval between the transmission frequency band of the downlink signal and the transmission frequency band of the uplink signal is small, the filter is insufficient to reduce the amplitude of the signal outside the transmission bandwidth of the downlink signal. As shown in the right diagram in (b) in FIG. 2, in the frequency band in which the uplink signal is located, there is a part of the downlink signal in the frequency band of the uplink signal that is close to the frequency band of the downlink signal. In addition, larger amplitude of suppressing the leaked signal by the filter indicates higher design costs of the filter. If the frequency domain interval between the uplink receive frequency band and the downlink transmit frequency band is increased to improve a suppression effect of the filter on the leaked signal, more frequency domain resources are wasted.

In view of this, embodiments of this application provide a communication method, so that a radio frequency device can estimate a leakage propagation characteristic corresponding to a signal that is leaked from a sending link to a receiving link. This helps the radio frequency device eliminate or reduce leakage interference from the sending link to the receiving link based on the leakage propagation characteristic.

It should be understood that, for ease of understanding and description, the following describes in detail the method provided in embodiments of this application by using interaction between a control device and the radio frequency device as an example. However, this should not constitute any limitation on an execution body of the method provided in this application. For example, the radio frequency device shown in the following embodiments may be replaced with a component (for example, a circuit, a chip, or a chip system) configured in the radio frequency device, and the control device shown in the following embodiments may be replaced with a component (for example, a circuit, a chip, or a chip system) configured in the control device.

FIG. 3 is a schematic flowchart of a communication method according to an embodiment of this application. As shown in FIG. 3, the method 300 may include the following steps.

S310: A control device sends resource indication information to a radio frequency device.

Correspondingly, the radio frequency device receives the resource indication information from the control device.

The resource indication information is used to determine at least one training resource. Each of the at least one training resource may be used to send a training signal. The training signal is used by the radio frequency device to determine a leakage propagation characteristic. The leakage propagation characteristic is used to determine a leaked signal that is in a downlink signal whose transmission is performed on a sending link (downlink) of the radio frequency device and that is leaked to a receiving link (uplink) of the radio frequency device. The training signal may be a service signal, or a signal that does not carry service data. This is not limited in this embodiment of this application.

For example, the resource indication information may include one or more of the following: a time domain length of each of the at least one training resource, a time domain start position of each of the at least one training resource, a frequency domain length of each of the at least one training resource, and a frequency domain start position of each of the at least one training resource.

The time domain length of the training resource may be one or more sub-frames (sub-frame), one or more slots (slot), or one or more symbols (symbol). This is not limited in this embodiment of this application. For example, if the time domain length of the training resource is a protocol-predefined or standard-predefined value, for example, one sub-frame, a time domain resource that is used as a training resource may be determined by using the time domain start position of each of the at least one training resource in the resource indication information. For another example, if time domain lengths of different training resources in the at least one training resource are the same, the time domain length of each of the at least one training resource in the resource indication information may be represented by one value of the time domain length. Correspondingly, when the resource indication information includes one value of the time domain length, the radio frequency device may determine that the time domain length of each of the at least one training resource is the time domain length.

The time domain start position of the training resource may be a position of a 1^{st} sub-frame occupied by the training resource, a position of a 1^{st} slot occupied by the training resource, or a position of a 1^{st} symbol occupied by the training resource. For example, if a time interval between adjacent training resources in the at least one training resource is fixed, the resource indication information may include a time domain start position of a 1^{st} training resource in the at least one training resource. Optionally, the time interval between adjacent training resources in the at least one training resource is a protocol-predefined or standard-predefined interval, or the resource indication information further includes the time interval between adjacent training resources in the at least one training resource.

The frequency domain length of the training resource may be one or more sub-bands (sub-band), one or more sub-channels (sub-channel), or one or more physical resource blocks (physical resource block, PRB). This is not limited in this embodiment of this application. For example, if the frequency domain length of the training resource is a protocol-predefined or standard-predefined value, for example, one sub-channel or a full bandwidth of the sending link of the radio frequency device, a frequency domain resource that can be used as a training resource may be determined by using the frequency domain start position of each of the at least one training resource in the resource indication information, or that the frequency domain resource of each of the at least one training resource is the full bandwidth of the sending link of the radio frequency device may be determined. For another example, if frequency domain lengths of different training resources in the at least one training resource are the same, the resource indication information may include one value of the frequency domain length, so that the radio frequency device can determine that the frequency domain length of each of the at least one training resource is the frequency domain length. In this case, a frequency domain resource used as a training resource may be determined based on the frequency domain start position of each of the at least one training resource.

The frequency domain start position of the training resource may be a position of a 1^{st} sub-band occupied by the training resource, a position of a 1^{st} sub-channel occupied by the training resource, or a position of a 1^{st} PRB occupied by the training resource. For example, if frequency domain start positions of different training resources in the at least one training resource are the same, the resource indication information may include one frequency domain start position.

Optionally, if one or a plurality of frequency domain resources of the training resource in the at least one training resource are inconsecutive in frequency domain, an interval between the plurality of frequency domain resources of the training resource may be protocol-predefined or standard-predefined, or the resource indication information may include the interval between the frequency domain resources of the plurality of training resources.

In a possible implementation, the resource indication information may include N bits, the N bits are in one-to-one correspondence with N training resources, and an n^{th} bit in the N bits is used to indicate whether a time domain resource corresponding to the n^{th} bit is used as a training resource. N is a positive integer, and n=1, 2, ..., N.

It should be understood that, if the at least one training resource includes a time domain resource, a time domain resource occupied by any training resource may be considered as a multiple of a time domain unit. The time domain unit may be a sub-frame, a slot, a symbol, or the like.

For example, if the multiple is 1, the any training resource is a resource corresponding to one time domain unit. If a value of the n^{th} bit is set to "1", it indicates that a time domain unit corresponding to the n^{th} bit may be used as a training resource. If the value of the n^{th} bit is set to "0", it indicates that the time domain unit corresponding to the n^{th} bit is not used as a training resource. Alternatively, if the value of the n^{th} bit is set to "0", it indicates that the time domain unit corresponding to the n^{th} bit may be used as a training resource. If the value of the n^{th} bit is set to "1", it indicates that the time domain unit corresponding to the n^{th} bit is not used as a training resource.

It may be understood that the N bits are a representation form of the time domain length of each of the at least one training resource and/or a representation form of the time domain start position of each of the at least one training resource.

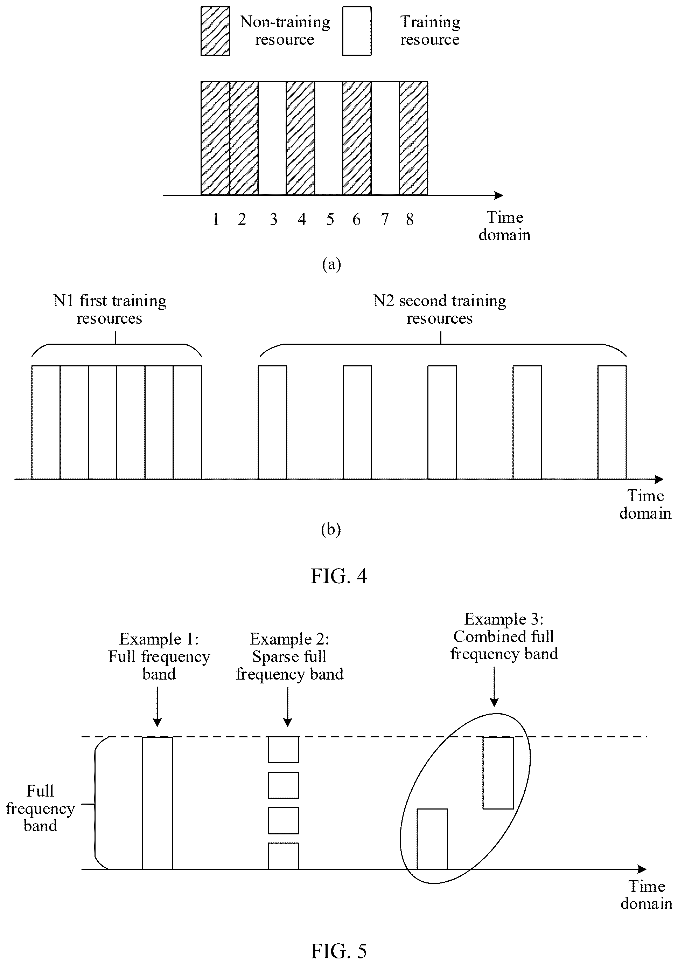

(a) in FIG. 4 shows eight time domain units: a time domain unit 1 to a time domain unit 8. The time domain unit 1, the time domain unit 2, the time domain unit 4, the time domain unit 6, and the time domain unit 8 are non-training resources, and the remaining time domain units are training resources. In this case, the resource indication information may include eight bits that are in one-to-one correspondence with the time domain unit 1 to the time domain unit 8. The eight bits are set to "11010101", which is used to indicate whether each of the time domain unit 1 to the time domain unit 8 belongs to the training resource. In this example, 1 represents that the time domain unit is not used as a training resource. It may be understood that, alternatively, a time unit corresponding to 1 may be considered as a training resource, and correspondingly, a time unit corresponding to 0 may be considered as a non-training resource. This is not limited in this application.

It can be learned from an example in (a) in FIG. 4 that time domain positions of three training resources may be determined based on the eight bits included in the resource indication information, to be specific, the time domain positions of the three training resources are respectively the time domain unit 3, the time domain unit 5, and the time domain unit 7. When a time domain position of a training resource is determined, a time domain start position and a time domain length of the training resource may also be determined. For example, a time domain start position of a training resource whose time domain position is the time domain unit 3 is the time domain unit 3, and a time domain length is one time domain unit. Therefore, the N bits are a representation form of the time domain length of each of the at least one training resource and/or a representation form of the time domain start position of each of the at least one training resource.

In a possible implementation, the control device sends the resource indication information to the radio frequency device through an interface between the control device and a first module included in the radio frequency device. In other words, the control device sends the resource indication information to the first module through the interface between the control device and the first module.

For example, the interface between the control device and the first module is an interface between a layer 2 (layer 2, L2) control module of the control device and the first device, or an interface between a layer 3 (layer 3, L3) control module of the control device and the first device. Interfaces between the control device and the first module may be connected through wires.

For example, the first module may be referred to as a power amplifier leakage cancellation (power amplifier leakage cancellation, PALC) module. The first module may be a physical entity or a logic circuit. This is not limited in this embodiment of this application.

The control device may send the resource indication information to the radio frequency device in a semi-static or dynamic manner. In other words, the resource indication information sent by the control device may be semi-static or dynamic. This is not limited in this embodiment of this application. For example, if the at least one training resource is a periodic resource, the control device may send the resource indication information to the radio frequency device in a semi-static manner. For another example, if the at least one training resource is an aperiodic resource, the control device may send the resource indication information to the radio frequency device in a dynamic manner. For example, the at least one training resource includes M training resources, and the control device may dynamically send M' pieces of resource indication information to the radio frequency device. Each of the M' pieces of resource indication information is used to indicate one or more of the M training resources, and different pieces of resource indication information in the M' pieces of resource indication information indicate different training resources. M and M' are positive integers.

It may be understood that semi-static means that a frequency of sending indication information is lower than a threshold, and dynamic means that the indication information is sent at a frequency greater than a threshold.

The following describes the at least one training resource indicated by the resource indication information.

In a possible implementation, the training resource meets the following condition: The training resource is only used to send a training signal, or a strength of an uplink signal (including an uplink data signal or an uplink reference signal) whose transmission is performed on the training resource is less than a strength threshold. The strength threshold is related to a requirement of the control device and/or a requirement of the radio frequency device on accuracy of the leakage propagation characteristic. If the strength of the uplink signal whose transmission is performed on the training resource is less than the strength threshold, the leakage propagation characteristic determined by the radio frequency device based on the training resource meets the requirement of the control device and/or the requirement of the radio frequency device on the accuracy of the leakage propagation characteristic. It should be noted that, if communication quality of uplink transmission meets a requirement of the control device and/or a requirement of the radio frequency device on the communication quality of uplink transmission after the radio frequency device eliminates or reduces leakage interference from the sending link of the radio frequency device to the receiving link of the radio frequency device based on the leakage propagation characteristic, it is considered that the leakage propagation characteristic meets the requirement of the control device and/or the requirement of the radio frequency device on the accuracy of the leakage propagation characteristic, in other words, the leakage propagation characteristic fulfills target performance.

The following describes distribution of training resources in the at least one training resource in time domain.

In a possible implementation, the at least one training resource includes N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources. Both N1 and N2 are positive integers.

For example, the N1 first training resources may also be referred to as training resources with a first time interval. In other words, the time interval between two adjacent first training resources in the N1 first training resources is the first time interval. Two adjacent first training resources are two first time domain resources adjacent in time domain.

The first time interval may be a standard-predefined or protocol-predefined time interval, or a time interval determined by the control device. This is not limited in this embodiment of this application. Optionally, the first time interval is less than duration corresponding to a time domain length of the first training resource. Optionally, if the first time interval is 0, the N1 first training resources are consecutive training resources.

Optionally, time intervals between two adjacent first training resources in the N1 first training resources may be equal or unequal. For example, the N1 first training resources include a training resource #1 to a training resource #3. The training resource #1 is adjacent to the training resource #2, and the training resource #2 is adjacent to the training resource #3. A time interval between the training resource #1 and the training resource #2 may be equal or unequal to a time interval between the training resource #2 and the training resource #3.

It may be understood that if the training resources are more centralized in time domain, the leakage propagation characteristic converges more quickly to the target performance when the radio frequency device estimates the leakage propagation characteristic. If the training resources are more dispersed in time domain, the leakage propagation characteristic converges more slowly to the target performance when the radio frequency device estimates the leakage propagation characteristic. When the control device indicates the N1 first training resources to the radio frequency device, because the time interval between adjacent first training resources in the N1 first training resources is small, or the N1 first training resources are consecutive, the N1 first training resources are centralized in time domain. Therefore, the leakage propagation characteristic can quickly converge to the target performance when the radio frequency device estimates the leakage propagation characteristic based on N1 training signals whose transmission is performed on the N1 first training resources.

Optionally, a time domain resource of the N1 first training resources corresponds to a cell restart phase.

It may be understood that specific service indicators are generally not counted in the cell restart phase. Therefore, an uplink service may not be scheduled in the cell restart phase. Further, when the time domain resource of the N1 first training resources corresponds to the cell restart phase, the N1 first training resources are not used for transmission of an uplink signal. This helps the radio frequency device determine a more accurate leakage propagation characteristic, and reduces impact on data transmission.

For example, the N2 second training resources may also be referred to as training resources with a second time interval. In other words, the time interval between two adjacent second training resources in the N2 second training resources is the second time interval. The second time interval is greater than the first time interval. Two adjacent second training resources are two second time domain resources adjacent in time domain.

The second time interval may be a standard-predefined or protocol-predefined time interval, or a time interval determined by the control device. This is not limited in this embodiment of this application. Optionally, the second time interval is greater than or equal to 100 milliseconds.

Optionally, time intervals between two adjacent second training resources in the N2 second training resources may be equal or unequal. For example, the N2 second training resources include a training resource #a to a training resource #c. The training resource #a is adjacent to the training resource #b, and the training resource #b is adjacent to the training resource #c. A time interval between the training resource #a and the training resource #b may be equal or unequal to a time interval between the training resource #b and the training resource #c.

It may be understood that, based on a time-varying characteristic of the radio frequency device, the leakage propagation characteristic also changes with time. Therefore, when the control device indicates the N2 second training resources to the radio frequency device, the radio frequency device may update the leakage propagation characteristic based on N2 training signals whose transmission is performed on the N2 second training resources, to ensure the accuracy of the leakage propagation characteristic.

It may be further understood that, because the leakage propagation characteristic changes with time, to ensure the accuracy of the leakage propagation characteristic, the radio frequency device needs to continuously update the leakage propagation characteristic based on the training signals sent on the training resources. In this case, the N2 second training resources optimally correspond to an entire actual service transmission process between the control device and the radio frequency device. In other words, the N2 second training resources are sparsely distributed in time domain in the entire actual service transmission process between the control device and the radio frequency device. When the N2 second training resources are sparsely distributed in time domain in the entire actual service transmission process between the control device and the radio frequency device, the radio frequency device may update the leakage propagation characteristic based on the N2 second training resources, and reduce impact on actual service scheduling between the control device and the radio frequency device.

(b) in FIG. 4 is a diagram of N1 first training resources and N2 second training resources. As shown in (b) in FIG. 4, the N1 first training resources are consecutive in time domain, and the N2 second training resources are distributed at equal intervals in time domain.

For example, the control device indicates the N1 first training resources and the N2 second training resources by using the resource indication information in the following manners.

Manner 1: The resource indication information includes one or more of the following: a time domain start position of the at least one training resource, N1, N2, the time interval between two adjacent first training resources in the N1 first training resources, and the time interval between two adjacent second training resources in the N2 second training resources.

The time interval between two adjacent first training resources in the N1 first training resources may be duration spaced between two adjacent first training resources, or may be a quantity of time domain units spaced between two adjacent first training resources. The time domain unit may be a sub-frame, a slot, a symbol, or the like.

It should be understood that, if the N1 first training resources are consecutive resources, the time interval included in the resource indication information may be 0 or any other indication information equivalent to a meaning expressed by 0, or the time interval between two adjacent first training resources in the N1 first training resources may not be included. In another possible case, the time interval between two adjacent second training resources in the N1 second training resources may be protocol-predefined or standard-predefined, or may be preconfigured. In this case, the time interval is optional, or includes indication information indicating that the time interval is a preset value. This is not limited in this application. The foregoing descriptions are applicable to descriptions of similar cases in other embodiments. Details are not described again.

The time interval between two adjacent second training resources in the N2 second training resources may be duration spaced between two adjacent second training resources, or may be a quantity of time domain units spaced between two adjacent second training resources. It should be understood that, if the time interval between two adjacent second training resources in the N2 second training resources is protocol-predefined or standard-predefined, or is preconfigured, the resource indication information may not include the time interval between two adjacent second training resources in the N2 second training resources.

It should be understood that, if N1 and N2 are protocol-predefined or standard-predefined, or are preconfigured, the resource indication information may not include N1 and N2.

It should be understood that, in Manner 1, the resource indication information may further include one or more of the following: the time domain start position of each of the at least one training resource, the time domain length of each of the at least one training resource, the frequency domain start position of each of the at least one training resource, and the frequency domain position of each of the at least one training resource.

If the resource indication information includes the time domain length of each of the at least one training resource, the radio frequency device may determine the time domain length of each of the at least one training resource. Further, the radio frequency device determines the time domain positions of the N1 first training resources and the N2 second training resources with reference to one or more of the following included in the resource indication information: the time domain start position of the at least one training resource, N1, N2, the time interval between two adjacent first training resources in the N1 first training resources, and the time interval between two adjacent second training resources in the N2 second training resources. It may be understood that, if the resource indication information does not include the time domain length of each of the at least one training resource, the radio frequency device may determine that the time domain length of each of the at least one training resource is a protocol-predefined or standard-predefined value.

If the resource indication information includes the frequency domain start position and/or the frequency domain length of each of the at least one training resource, the radio frequency device may determine the frequency domain position of each of the at least one training resource. It may be understood that, if the resource indication information does not include the frequency domain length of each of the at least one training resource, the radio frequency device may determine that the frequency domain length of each of the at least one training resource is a protocol-predefined or standard-predefined value, or is a full frequency band of the sending link of the radio frequency device.

Manner 2: The control device indicates the N1 first training resources and the N2 second training resources by using a bitmap (bitmap), in other words, the resource indication information includes N bits. For descriptions of the N bits, refer to the foregoing descriptions. Details are not described herein again. It should be understood that, when the N1 first training resources and the N2 second training resources are indicated by using the N bits, N≥N1+N2.

(b) in FIG. 4 is used as an example. It is assumed that the time domain unit is a sub-frame, the first training resource and the second training resource each include one sub-frame, the time interval between two adjacent second training resources is two sub-frames, and that the value of the n^{th} bit is set to "1" indicates that the time domain unit corresponding to the n^{th} bit belongs to the at least one training resource. In this case, the N bits are "111111001001001001001".

It should be noted that the N bits may be carried in one piece of resource indication information, or may be carried in a plurality of pieces of resource indication information. This is not limited in this embodiment of this application. (b) in FIG. 4 is used as an example. The control device may send three pieces of resource indication information. A 1^{st} piece of resource indication information includes six bits used to indicate six first training resources, and the six bits are "111111". A 2^{nd} piece of resource indication information includes two bits, and the two bits are "00", and are used to indicate that two sub-frames spaced between a 6^{th} first training resource and a 1^{st} second training resource do not belong to the at least one training resource. A 3^{rd} piece of resource indication information includes 13 bits used to indicate five second training resources, and the 13 bits are "1001001001001".

The foregoing describes distribution of the training resources in the at least one training resource in time domain. The following describes distribution of the training resources in the at least one training resource in frequency domain. It should be understood that the distribution of the training resources in the at least one training resource in frequency domain does not depend on the distribution of the training resources in time domain. In other words, whether the at least one training resource is consecutive, equally spaced, or the like in time domain does not affect the distribution of the training resources in the at least one training resource in frequency domain.

In a possible implementation, the at least one training resource includes a third training resource.

In a possible case, as shown in Example 1 in FIG. 5, frequency domain resources of the third training resource are the full frequency band of the sending link of the radio frequency device. To be specific, the frequency domain resources of the third training resource are a segment of consecutive frequency domain resources, and the segment of consecutive frequency domain resources is the full frequency band of the sending link of the radio frequency link. Correspondingly, a training signal whose transmission is performed on the third training resource may be referred to as a downlink signal scheduled in the full frequency band.

It should be understood that, when transmission of the downlink signal scheduled in the full frequency band is performed on the third training resource, the radio frequency device may determine, based on the downlink signal scheduled in the full frequency band, a leakage propagation characteristic corresponding to a "complete downlink bandwidth". This helps the radio frequency device determine, based on the leakage propagation characteristic corresponding to the "complete downlink bandwidth", a leaked signal that is in a downlink signal whose transmission is performed on any frequency band in the full frequency band of the sending link of the radio frequency device and that is leaked to the receiving link of the radio frequency device.

In another possible case, as shown in Example 2 in FIG. 5, frequency domain resources of the third training resource are sparsely distributed in the full frequency band of the sending link of the radio frequency device. Correspondingly, a training signal whose transmission is performed on the third training resource may be referred to as a downlink signal scheduled in a sparse full frequency band.

That the frequency domain resources of the third training resource are sparsely distributed in the full frequency band of the sending link of the radio frequency device means that frequency domain units included in the third training resource are sparsely distributed in the full frequency band of the sending link of the radio frequency device. For example, the frequency domain units included in the third training resource are distributed at equal intervals or unequal intervals on the full frequency band of the sending link of the radio frequency device. The frequency domain unit may be a sub-band, a sub-channel, a PRB, or the like.

It should be understood that, when transmission of the downlink signal scheduled in the sparse full frequency band is performed on the third training resource, the radio frequency device may determine, based on the downlink signal scheduled in the sparse full frequency band, a leakage propagation characteristic corresponding to a "complete downlink bandwidth". This helps the radio frequency device determine, based on the leakage propagation characteristic corresponding to the "complete downlink bandwidth", the leaked signal that is in a downlink signal whose transmission is performed on any frequency band in the full frequency band of the sending link of the radio frequency device and that is leaked to the receiving link of the radio frequency device. In addition, in comparison with the downlink signal scheduled in the full frequency band, less energy and less resources are consumed for sending, by the control device, the downlink signal scheduled in the sparse full frequency band. Therefore, energy saving can be achieved while the leakage propagation characteristic corresponding to the "complete downlink bandwidth" is determined.

In another possible case, as shown in Example 3 in FIG. 5, a frequency domain resource of the third training resource includes a part of the full frequency band of the sending link of the radio frequency device. In this case, the at least one training resource further includes a fourth training resource, a time domain resource of the third training resource is different from a time domain resource of the fourth training resource, and a frequency domain resource of the fourth training resource includes a remaining frequency band that is not occupied by the third training resource in the full frequency band of the sending link of the radio frequency device. It should be understood that the fourth training resource may include one or more training resources.

It should be understood that, when the at least one training resource includes the third training resource and the fourth training resource, a training signal #1 whose transmission is performed on the third training resource and a training signal #2 whose transmission is performed on the fourth training resource may be combined into a downlink signal scheduled in the full frequency band. Therefore, the radio frequency device may determine, based on the training signal #1 and the training signal #2, a leakage transmission characteristic corresponding to a "complete downlink bandwidth". This helps the radio frequency device determine, based on the leakage propagation characteristic corresponding to the "complete downlink bandwidth", a leaked signal that is in the downlink signal whose transmission is performed on any frequency band in the full frequency band of the sending link of the radio frequency device and that is leaked to the receiving link of the radio frequency device. In addition, because the training signals whose transmission is performed on the third training resource and the fourth training resource may be combined into a downlink signal scheduled in the full frequency band, the radio frequency device does not need to supplementarily send an "additional signal" on the time domain resource of the third training resource and/or the time domain resource of the fourth training resource, to construct the downlink signal scheduled in the full frequency band. In this way, resource and energy consumption can be reduced.

For example, the control device may determine the at least one training resource based on an actual uplink and downlink service scheduling requirement. It should be understood that, when determining the at least one training resource based on the actual uplink and downlink service scheduling, the control device may aim to minimize impact on the actual uplink and downlink service scheduling requirement.

For example, if the control device determines, based on an actual uplink service scheduling requirement, not to schedule an uplink service on a resource, the control device may determine the resource on which the uplink service is not scheduled as one or more training resources in the at least one training resource. In this way, accuracy of the leakage propagation characteristic determined by the radio frequency device based on the training resource can be ensured, and impact on the actual uplink service scheduling requirement can be avoided.

For another example, if the control device determines, based on an actual downlink service scheduling requirement, to schedule, on a resource, a downlink service signal in the full frequency band, the control device may determine the resource for transmission of the downlink service signal scheduled in the full frequency band as one or more training resources in the at least one training resource. It should be understood that, if actual downlink service scheduling includes the downlink service signal scheduled in the full frequency band, the control device uses the resource for transmission of the downlink service signal scheduled in the full frequency band as a training resource, so that the radio frequency device can determine, based on the downlink service signal scheduled in the full frequency band, the leakage propagation characteristic corresponding to the "complete downlink bandwidth", and the actual downlink service scheduling requirement can be matched.

For another example, if the control device determines, based on an actual downlink service scheduling requirement, to schedule, on a resource, a downlink service signal in the sparse full frequency band, the control device may determine the resource for transmission of the downlink service signal scheduled in the sparse full frequency band as one or more training resources in the at least one training resource. It should be understood that, if actual downlink service scheduling includes the downlink service signal scheduled in the sparse full frequency band, the control device uses the resource for transmission of the downlink service signal scheduled in the sparse full frequency band as a training resource, so that the radio frequency device can determine, based on the downlink service signal scheduled in the sparse full frequency band, the leakage propagation characteristic corresponding to the "complete downlink bandwidth", and the actual downlink service scheduling requirement can be matched. In addition, because the radio frequency device may determine, based on the downlink service signal scheduled in the sparse full frequency band, the leakage propagation characteristic corresponding to the "complete downlink bandwidth", the control device does not need to supplementarily send an "additional signal" on a time domain resource for transmission of the downlink service signal scheduled in the sparse full frequency band, to construct the downlink service signal scheduled in the full frequency band. In this way, resource and energy consumption can be reduced.

For another example, if the control device determines, based on an actual downlink service scheduling requirement, that a downlink service signal 1 scheduled on a time domain resource #1 and a downlink service signal 2 scheduled on a time domain resource #2 may be combined into a downlink service signal on the full frequency band, the control device may determine the resources for transmission of the downlink service signal #1 and the downlink service signal #2 as training resources. It should be understood that, if the downlink service signal #1 and the downlink service signal #2 may be combined into a downlink service signal on the full frequency band, the control device uses the resources for transmission of the downlink service signal #1 and the downlink service signal #2 as training resources, so that the radio frequency device can determine, based on the downlink service signal #1 and the downlink service signal #2, the leakage propagation characteristic corresponding to the "complete downlink bandwidth", and the actual downlink service scheduling requirement can be matched. In addition, because the radio frequency device may determine, based on the downlink service signal 1 and the downlink service signal 2, the leakage propagation characteristic corresponding to the "complete downlink bandwidth", the control device does not need to supplementarily send an "additional signal" on the time domain resource for transmission of the downlink service signal 1 and/or the time domain resource for transmission of the downlink service signal 2, to construct the downlink service signal scheduled in the full frequency band. In this way, resource and energy consumption can be reduced.

S320: The control device sends a training signal to the radio frequency device.

Correspondingly, the radio frequency device receives the training signal from the control device.

The training signal may be a downlink service signal or a downlink reference signal. This is not limited in this embodiment of this application.

It should be understood that the control device sends at least one training signal to the radio frequency device on the at least one training resource.

S330: The radio frequency device determines the leakage propagation characteristic based on the training signal.

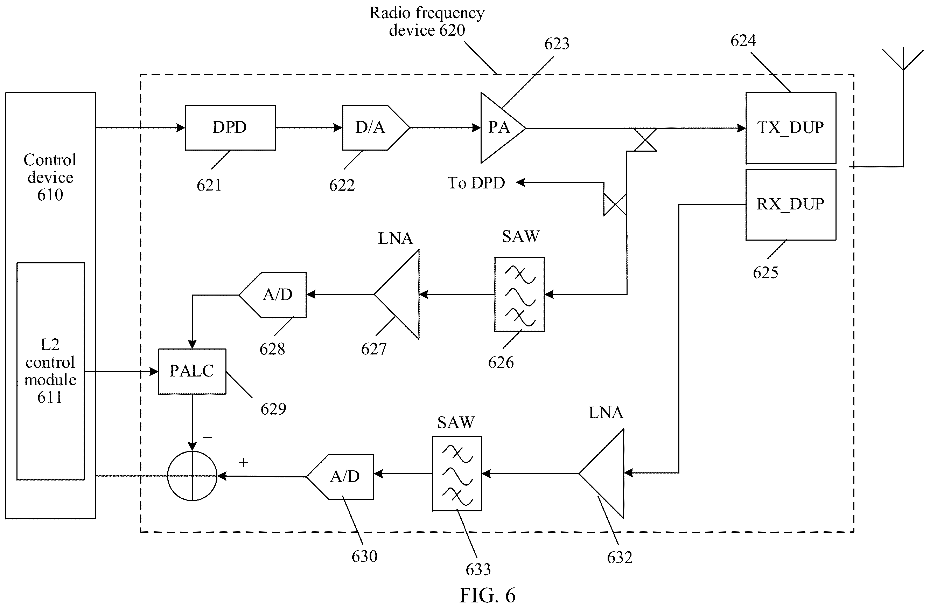

For example, the following describes, with reference to FIG. 6, a manner in which the radio frequency device determines the leakage propagation characteristic based on the leaked signal. It should be noted that, in FIG. 6, an example in which the first module is a PALC module 629, an L2 control module 611 included in the control device 610 is connected to the PALC module 629, a sending link of the radio frequency device 620 includes a digital pre-distortion (digital pre-distortion, DPD) module 621, a digital-to-analog converter (digital-to-analog converter, D/A) 622, a power amplifier (power amplifier, PA) 623, and a transmit duplexer (transmit duplexer, TX_DUP) 624, and a receiving link of the radio frequency device 620 includes a receive duplexer (receive duplexer, RX_DUP) 625, a low noise amplifier (low noise amplifier, LNA) 632, a surface acoustic wave (surface acoustic wave, SAW) filter 633 and a digital-to-analog converter (analog-to-digital converter, A/D) 630 is used. It should be understood that a structure of the control device and a structure of the radio frequency device are not limited in embodiments of this application. For example, the L2 control module 611 in FIG. 6 may alternatively be replaced with an L3 control module.

A training signal sent by the control device 610 on a 1^{st} training resource in the at least one training resource is denoted as S₁. The training signal Si arrives at the PALC module 629 through the DPD module 621, the D/A 622, the PA 623, a SAW filter 626, an LNA 627, and an A/D 628. In this case, the PALC module 629 may obtain the training signal S₁.

An uplink signal Y₁ received by the radio frequency device 620 on the 1^{st} training resource on the receiving link (including the RX_DUP 625, the LNA 632, the SAW filter 633, and the A/D 630) may arrive at the PALC module 629. The uplink signal Y₁ includes a leaked signal in the training signal S₁ that is from the sending link (including the DPD module 621, the D/A 622, the PA 623, and the TX_DUP 624) and that is received by the radio frequency device 620 on the receiving link. The uplink signal Y₁ may be represented as: Y=H₁·S₁+S_{UL}+N. H₁ represents a leakage propagation characteristic of the training signal #1, H₁·S₁ represents the leaked signal that is in the training signal S₁ and that is leaked to the receiving link, S_{UL} represents an uplink service signal, and N represents noise.

It may be understood that, when the training resource is not used for transmission of an uplink signal, or when a strength of an uplink signal whose transmission is performed on the training resource is less than a strength threshold, it may be considered that S_{UL} is approximately equal to 0 or S_{UL} does not affect fulfillment of estimation performance of H₁. The training signal #1 is a downlink signal scheduled in the full frequency band, and N is also approximately equal to 0. Further, the PALC module 629 may determine H₁ according to Y₁=H₁·S₁.

Refer to the foregoing steps. The radio frequency device 620 may determine one or more leakage propagation characteristics based on at least one training signal whose transmission is performed on the at least one training resource. Further, the radio frequency device 620 performs averaging on the one or more leakage propagation characteristics, to obtain a finally determined leakage propagation characteristic.

Optionally, after determining the leakage propagation characteristic based on the training signal whose transmission is performed on the at least one training resource, the radio frequency device may eliminate or reduce leakage interference from the sending link to the receiving link based on the leakage propagation characteristic.

For example, the following describes, with reference to FIG. 6, a manner in which the radio frequency device eliminates or reduces the leakage interference from the sending link to the receiving link based on the leakage propagation characteristic.

A downlink signal sent by the control device 610 is denoted as S_{DL}. The downlink signal S_{DL} arrives at the PALC module 629 through the DPD module 621, the D/A 622, the PA 623, the SAW filter 626, the LNA 627, and the A/D 628. In this case, the PALC module 629 may obtain the downlink signal S_{DL}.

An uplink signal Y received by the radio frequency device 620 may arrive at the PALC module 629. The uplink signal Y includes an uplink service signal S_{UL} and a leaked signal in the downlink signal S_{DL} that is from the sending link (including the DPD module 621, the D/A 622, the PA 623, and the TX_DUP 624) and that is received by the radio frequency device 620 on the receiving link. The uplink signal Y may be represented as: Y=H_{DL}·S_{DL}+S_{UL}+N. H_{DL} represents a leakage propagation characteristic of the downlink signal S_{DL}.

Further, the PALC module 629 may eliminate or reduce the leakage interference from the sending link to the receiving link according to the following formula: Y'= H_{DL}·S_{DL}+S_{UL}+N-H·S_{DL}. H represents a leakage propagation characteristic determined by the radio frequency device based on the at least one training signal.

It may be understood that the leakage propagation characteristic H determined by the radio frequency device based on the at least one training signal is similar to H_{DL}. Therefore, the leakage interference from the sending link to the receiving link can be eliminated or reduced according to the foregoing formula.

In this embodiment of this application, the control device sends the resource indication information to the radio frequency device. Then, the radio frequency device can distinguish, based on the resource indication information, between a training resource used for transmission of the training signal and a non-training resource not used for transmission of the training signal, so that the radio frequency device can determine the leakage propagation characteristic based on the training signal whose transmission is performed on the training resource, and training complexity of the radio frequency device can be reduced.

In addition, the control device may determine the at least one training resource based on the actual uplink and downlink service scheduling requirement. In this way, when accuracy of the leakage propagation characteristic determined by the radio frequency device based on the training signal whose transmission is performed on the at least one training resource is ensured, impact on actual uplink and downlink service scheduling and/or virtual loading of a downlink sending signal can be reduced, thereby achieving an energy saving effect. For example, if the control device determines that downlink service signals whose transmission is performed on a time domain resource #1 and a time domain resource #2 may be combined into a downlink signal scheduled in the full frequency band, the control device may determine the time domain resource #1 and the time domain resource #2 as training resources. Further, because the downlink service signals whose transmission is performed on the time domain resource #1 and the time domain resource #2 may be combined into a downlink signal scheduled in the full frequency band, the control device does not need to load an additional virtual downlink signal on a frequency band other than a frequency band used for transmission of the downlink service signals on the time domain resource #1 or the time domain resource #2, to construct the downlink signal scheduled in the full frequency band. In this way, the energy saving effect can be achieved.

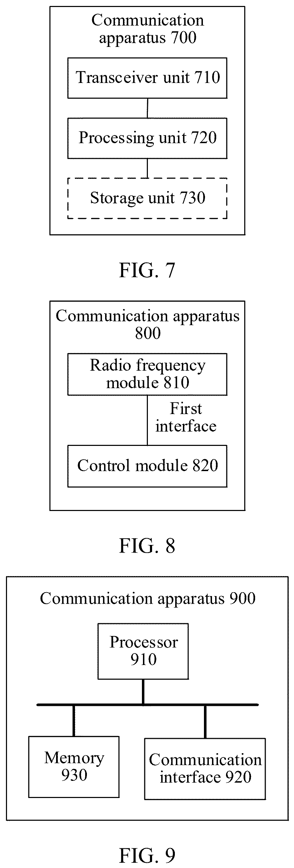

The foregoing describes in detail the methods provided in embodiments of this application with reference to FIG. 3 to FIG. 6. The following describes in detail apparatuses provided in embodiments of this application with reference to FIG. 7 to FIG. 10. It should be understood that descriptions of apparatus embodiments correspond to the descriptions of the method embodiments. Therefore, for content that is not described in detail, refer to the foregoing method embodiments. For brevity, details are not described herein again.

FIG. 7 is a block diagram of a communication apparatus 700 according to an embodiment of this application. As shown in the figure, the communication apparatus 700 may include a transceiver unit 710 and a processing unit 720.

In a possible design, the communication apparatus 700 may be the radio frequency device in the foregoing method embodiments, or may be a chip configured to implement a function of the radio frequency device in the foregoing method embodiments.

It should be understood that the communication apparatus 700 may correspond to the radio frequency device in the method 300 according to embodiments of this application, and the communication apparatus 700 may include a unit configured to perform the method performed by the radio frequency device in the method 300 in FIG. 3. In addition, the units in the communication apparatus 700 and the foregoing other operations and/or functions are respectively for implementing corresponding procedures of the method 300 in FIG. 3. It should be understood that a specific process in which the units perform the foregoing corresponding steps is described in detail in the foregoing method embodiments. For brevity, details are not described herein again.

In another possible design, the communication apparatus 700 may be the control device in the foregoing method embodiments, or may be a chip configured to implement a function of the control device in the foregoing method embodiments.

It should be understood that the communication apparatus 700 may correspond to the control device in the method 300 according to embodiments of this application, and the communication apparatus 700 may include a unit configured to perform the method performed by the control device in the method 300 in FIG. 3. In addition, the units in the communication apparatus 700 and the foregoing other operations and/or functions are respectively for implementing corresponding procedures of the method 300 in FIG. 3. It should be understood that the specific process in which the units perform the foregoing corresponding steps is described in detail in the foregoing method embodiments. For brevity, details are not described herein again.

It should be further understood that the transceiver unit 710 in the communication apparatus 700 may correspond to a transceiver 920 in a communication apparatus 900 shown in FIG. 9, and the processing unit 720 in the communication apparatus 700 may correspond to a processor 910 in the communication apparatus 900 shown in FIG. 9.

It should be further understood that, when the communication apparatus 700 is a chip, the chip includes a transceiver unit and a processing unit. The transceiver unit may be an input/output circuit or a communication interface. The processing unit may be a processor, a microprocessor, or an integrated circuit integrated on the chip.

The transceiver unit 710 is configured to implement signal receiving and sending operations of the communication apparatus 700, and the processing unit 720 is configured to implement a signal processing operation of the communication apparatus 700.

Optionally, the communication apparatus 700 further includes a storage unit 730, and the storage unit 730 is configured to store instructions.

FIG. 8 is a block diagram of a communication apparatus 800 according to an embodiment of this application. As shown in FIG. 8, the communication apparatus 800 includes a radio frequency module 810 and a control module 820. The radio frequency module 810 and the control module 820 are connected through a first interface. For descriptions of the first interface, refer to the foregoing descriptions. The radio frequency module 810 is configured to perform the method performed by the radio frequency device in FIG. 3, and the control module 820 is configured to perform the method performed by the control device in FIG. 3. For example, the radio frequency module is an RRU, an RU, or an AAU, and the control module is a BBU, a BU, a CU, or a DU.

FIG. 9 is a block diagram of a communication apparatus 900 according to an embodiment of this application. As shown in FIG. 9, the communication apparatus 900 includes at least one processor 910 and a transceiver 920. The processor 910 is coupled to a memory, and is configured to execute instructions stored in the memory, to control the transceiver 920 to send a signal and/or receive a signal. Optionally, the communication apparatus 900 further includes a memory 930, configured to store instructions.

It should be understood that the processor 910 and the memory 930 may be combined into one processing apparatus, and the processor 910 is configured to execute program code stored in the memory 930 to implement the foregoing functions. During specific implementation, the memory 930 may alternatively be integrated in the processor 910, or may be independent of the processor 910.

It should be further understood that the transceiver 920 may include a receiver (or referred to as a receiving machine) and a transmitter (or referred to as a transmitting machine). The transceiver 920 may further include an antenna. There may be one or more antennas. The transceiver 920 may alternatively be a communication interface or an interface circuit.

When the communication apparatus 900 is a chip, the chip includes a transceiver unit and a processing unit. The transceiver unit may be an input/output circuit or a communication interface. The processing unit may be a processor, a microprocessor, or an integrated circuit integrated on the chip.

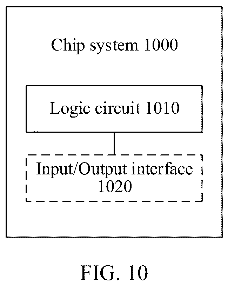

FIG. 10 is a diagram of a chip system according to an embodiment of this application. The chip system herein may also be a system including a circuit. The chip system 1000 shown in FIG. 10 includes a logic circuit 1010 and an input/output interface (input/output interface) 1020. The logic circuit is configured to be coupled to the input interface, and perform transmission on data (for example, first indication information) through the input/output interface, to perform the method in FIG. 3.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods can be completed by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be completed by using the hardware integrated logic circuit in the processor, or by using the instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the methods provided in embodiments of this application, this application further provides a computer program product. The computer program product includes computer program code. When the computer program code is run on a computer, the computer is caused to perform the method in the embodiment shown in FIG. 3.

According to the methods provided in embodiments of this application, this application further provides a computer-readable medium. The computer-readable medium stores program code. When the program code is run on a computer, the computer is caused to perform the method in the embodiment shown in FIG. 3.

According to the methods provided in embodiments of this application, this application further provides a system, including the foregoing radio frequency device and control device.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving resource indication information, wherein the resource indication information is used to determine information about at least one training resource;
receiving at least one training signal on the at least one training resource; and
determining a leakage propagation characteristic based on the at least one training signal, wherein the leakage propagation characteristic is used to determine a signal that is leaked from a sending link to a receiving link.

2. The method according to claim 1, wherein the method is applied to a radio frequency device, and receiving the resource indication information comprises:
receiving, by the radio frequency device, the resource indication information from a control device through an interface between a first module comprised in the radio frequency device and the control device, wherein the first module is configured to determine the leakage propagation characteristic based on the at least one training signal.

3. The method according to claim 2, wherein the interface between the first module and the control device is an interface between the first module and a layer 2 L2 control module of the control device, or an interface between the first module and a layer 3 L3 control module of the control device.

4. The method according to any one of claims 1 to 3, wherein the resource indication information comprises one or more of the following: a time domain length of each of the at least one training resource, a time domain start position of each of the at least one training resource, a frequency domain start position of each of the at least one training resource, and a frequency domain length of each of the at least one training resource.

5. The method according to any one of claims 1 to 4, wherein the at least one training resource comprises N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources, wherein both N1 and N2 are positive integers.

6. The method according to claim 5, wherein a time domain resource of the N1 first training resources corresponds to a cell restart phase.

7. The method according to claim 5 or 6, wherein the resource indication information comprises one or more of the following: a time domain start position of the at least one training resource, N1, N2, the time interval between two adjacent first training resources in the N1 first training resources, and the time interval between two adjacent second training resources in the N2 second training resources.

8. The method according to any one of claims 1 to 7, wherein the resource indication information comprises N bits, the N bits are in one-to-one correspondence with N time domain units, and an n^{th} bit in the N bits is used to indicate whether a time domain unit corresponding to the n^{th} bit belongs to the at least one training resource, wherein N is a positive integer, and n=1, 2, ..., N.

9. The method according to any one of claims 1 to 8, wherein the at least one training resource comprises a third training resource, and a frequency domain resource of the third training resource is a full frequency band of the sending link, or a frequency domain resource of the third training resource is sparsely distributed in a full frequency band of the sending link, or a frequency domain resource of the third training resource comprises a part of a full frequency band of the sending link.

10. The method according to claim 9, wherein the frequency domain resource of the third training resource comprises a part of the full frequency band of the sending link, the at least one training resource further comprises a fourth training resource, a time domain resource of the fourth training resource is different from a time domain resource of the third training resource, and a frequency domain resource of the fourth training resource comprises a remaining frequency band that is not occupied by the third training resource in the full frequency band.

11. The method according to any one of claims 1 to 10, wherein a training resource in the at least one training resource is not used for transmission of an uplink signal, or a strength of an uplink signal whose transmission is performed on the training resource is less than a strength threshold.

12. A communication method, comprising:
sending resource indication information, wherein the resource indication information is used to determine information about at least one training resource; and
sending at least one training signal on the at least one training resource, wherein the at least one training signal is used to determine a leakage propagation characteristic, and the leakage propagation characteristic is used to determine a signal that is leaked from a sending link to a receiving link.

13. The method according to claim 12, wherein the method is applied to a control device, and the sending the resource indication information comprises:
sending, by the control device, the resource indication information to a radio frequency device through an interface between a first module comprised in the radio frequency device and the control device, wherein the first module is configured to determine the leakage propagation characteristic based on the at least one training signal.

14. The method according to claim 13, wherein the interface between the first module and the control device is an interface between the first module and a layer 2 L2 control module of the control device, or an interface between the first module and a layer 3 L3 control module of the control device.

15. The method according to any one of claims 12 to 14, wherein the resource indication information comprises one or more of the following: a time domain length of each of the at least one training resource, a time domain start position of each of the at least one training resource, a frequency domain start position of each of the at least one training resource, and a frequency domain length of each of the at least one training resource.

16. The method according to any one of claims 12 to 15, wherein the at least one training resource comprises N1 first training resources and N2 second training resources, the N1 first training resources are located before the N2 second training resources in time domain, and a time interval between two adjacent first training resources in the N1 first training resources is less than a time interval between two adjacent second training resources in the N2 second training resources, wherein both N1 and N2 are positive integers.

17. The method according to claim 16, wherein a time domain resource of the N1 first training resources corresponds to a cell restart phase.

18. The method according to claim 16 or 17, wherein the resource indication information comprises one or more of the following: a time domain start position of the at least one training resource, N1, N2, the time interval between two adjacent first training resources in the N1 first training resources, and the time interval between two adjacent second training resources in the N2 second training resources.

19. The method according to any one of claims 12 to 18, wherein the resource indication information comprises N bits, the N bits are in one-to-one correspondence with N time domain units, and an n^{th} bit in the N bits is used to indicate whether a time domain unit corresponding to the n^{th} bit belongs to the at least one training resource, wherein N is a positive integer, and n=1, 2, ..., N.

20. The method according to any one of claims 12 to 19, wherein the at least one training resource comprises a third training resource, and a frequency domain resource of the third training resource is a full frequency band of the sending link, or a frequency domain resource of the third training resource is sparsely distributed in a full frequency band of the sending link, or a frequency domain resource of the third training resource comprises a part of a full frequency band of the sending link.

21. The method according to claim 20, wherein the frequency domain resource of the third training resource comprises a part of the full frequency band of the sending link, the at least one training resource further comprises a fourth training resource, a time domain resource of the fourth training resource is different from a time domain resource of the third training resource, and a frequency domain resource of the fourth training resource comprises a remaining frequency band that is not occupied by the third training resource in the full frequency band.

22. The method according to any one of claims 12 to 21, wherein the method further comprises:
determining the at least one training resource based on an actual uplink and downlink service scheduling requirement.

23. The method according to claim 22, wherein a training resource in the at least one training resource is not used for transmission of an uplink signal, or a strength of an uplink signal whose transmission is performed on the training resource is less than a strength threshold.

24. A communication method, comprising:
sending, by a control device, resource indication information to a radio frequency device, wherein the resource indication information is used to determine information about at least one training resource;
sending, by the control device, at least one training signal to the radio frequency device on the at least one training resource; and
determining, by the radio frequency device, a leakage propagation characteristic based on the at least one training signal, wherein the leakage propagation characteristic is used to determine a signal that is leaked from a sending link of the radio frequency device to a receiving link of the radio frequency device.

25. A communication apparatus, comprising a module or a unit configured to implement the method according to any one of claims 1 to 11.

26. A communication apparatus, comprising a module or a unit configured to implement the method according to any one of claims 12 to 23.

27. A computer-readable storage medium, configured to store a computer program, wherein the computer program comprises instructions for implementing the method according to any one of claims 1 to 11, or comprises instructions for implementing the method according to any one of claims 12 to 23.

28. A communication system, comprising the apparatus according to claim 25 and the apparatus according to claim 26.

29. A computer program product, wherein the computer program product comprises a computer program or instructions for performing the method according to any one of claims 1 to 11, or comprises a computer program or instructions for performing the method according to any one of claims 12 to 23.
